# EUROPEAN PATENT APPLICATION

(11) **EP 1 400 165 A1**
(43) Date of publication of application: **24.03.2004**
(21) Application number: 03077969.8
(22) Date of filing: 19.09.2003
(51) Int. Cl.: A01G 9/12, A01G 17/16

(54) **Dispenser assembly for elongated objects**

(30) Priority: 19.09.2002 NL 1021498
(71) Applicant: Keijzer, Edward, 3155 SM Maasland (NL)
(72) Inventor: Keijzer, Edward, 3155 SM Maasland (NL)
(74) Representative: van Westenbrugge, Andries

(57) **Abstract**

Dispenser assembly for elongated objects (11) such as plant stakes. Plant stakes are separated individually from a store and pushed into a substrate or pot plant. Individual separation takes place by means of a construction, adjoining the dispensing opening (12) of the store, consisting of a central roller (16) provided with a number of longitudinal grooves (17) for accommodating the stakes and provided on either side, some distance therefrom, with discs (15,18) for supporting stakes. If the stakes are skew or if they are inadmissibly bent they drop off the roller and are not used further.

## Description

The present invention relates to a dispenser assembly for elongated objects such as plant stakes, comprising a store provided with an elongated dispensing opening for said objects, as well as a conveyor, moving past said dispensing opening, for said objects, said conveyor comprising a central part, said central part being bordered on either side by a support part located, each support part being spaced from the central part and arranged so as to support one end of said elongated object. Such a dispenser assembly is disclosed in DE 26 16 124 B.

Stakes are inserted in a wide variety of pot plants in order to control the growth and/or to support the plant. In general, such stakes are inserted by hand. Because this is a relatively simple task, attempts to mechanise this have already been made for some considerable time. However, individual separation of the various stakes originating from a relatively large store is found to be a major problem. If all stakes are exactly the same size and are accurately straight, no problems arise. However, stakes that are bent to some extent are often encountered and with mechanically operating devices known to date it has not proved possible either to remove such stakes or to place them in a suitable manner. Bent stakes arise, for example, because these are obtained from a larger part of bamboo, where the characteristics change around the periphery and result in warping. Therefore, with mechanically operating systems use is made of straight stakes, which, however, are appreciably more expensive. Stakes made from beech are an example.

Apart from the cost price, the user also has wishes. For instance, bamboo stakes are demanded for, for example, begonias and ficusses, but these stakes give the abovementioned problems.

In the abovementioned document DE 26 16 124 B a construction is described provided with two spaced peripheral rollers, both of which are provided with accommodations for stakes.

Although dispensing is possible in many cases with this construction, it is found that in the case where the stake is at somewhat of an angle this is picked up by a groove at one side, as a result of which the machine jams, certainly as a result of the presence of a protective cover. With the construction according to DE 26 16 124 B individual separation of the stakes, in particular satay sticks, already takes place before dispensing to the roller. This means that if bent stakes are present, jamming already takes place in the feed hopper.

The aim of the present invention is to avoid this disadvantage.

This aim is realised with a dispenser assembly as described above in that said central part is provided with accommodations that are designed to accommodate said objects and extend essentially parallel to said dispensing opening.

A structure with a central part or a number of central parts provided with accommodations for transporting the stake is able to separate the stakes individually, that is to say to remove them one by one from a dispensing opening. However, there is no control whatsoever that the stakes rest in the accommodations in the correct manner and that these are not so bent that further processing is impossible. This problem can be avoided by, furthermore, according to the invention always arranging support parts some distance away from the central part or parts. The support parts can be provided with accommodations for accommodating the stakes, but according to an advantageous embodiment such accommodations are not present. With this construction the support part is made smooth on the outside. According to an advantageous embodiment of the invention the elongated dispensing opening is made directly adjoining the central part and designed to contain various elongated objects alongside one another. That is to say, if a stake is so bent that it is not picked up by the accommodations in the central part this stake remains at the dispensing opening and another stake adjacent thereto is then picked up by the accommodations in the central part. As a result of such mutual movement of the elongated objects or stakes, the abovementioned bent stake will be moved or turned and in general will reach a position such that it can be captured by the accommodations and can be manipulated.

The structure described above can be implemented with a number of conveyors extending alongside one another. That is to say the central part is implemented as a central conveyor provided with accommodations and adjoining this central conveyor there are two smaller conveyor parts which provide the support parts.

According to an advantageous embodiment the part provided with accommodations and the support parts are made circular. With this structure the part provided with accommodations comprises a cylinder provided with a number of peripheral grooves extending parallel to the longitudinal axis. The support part is preferably made smooth on the outside and the external diameter thereof approximately corresponds to the diameter delimited by the base of the recesses in the cylinder, that is to say the lowest point on which the stakes come to rest.

It has been found that if stakes for whatever reason come to rest obliquely in or on the accommodations, the position thereof is corrected by the presence of the support parts. That is to say, it is no longer possible for the stakes to tilt to an appreciable angle with respect to the part provided with accommodations because the support parts support the stakes laterally. It is only if there is a very large incorrect angle that the support parts no longer work and in that case the stakes are not picked up and are unsuitable for use. The same applies for bent stakes. Up to a certain tolerance these can be transported by a combination of accommodations(s) and the support parts. Beyond that tolerance such bent stakes stay behind.

According to an advantageous embodiment of the invention the cylinder in which the accommodations are made and discs are on a common shaft driven by a motor.

The invention also relates to an apparatus comprising a series of dispenser assemblies as described above. These are provided with a common store. The dispenser assemblies are located one after the other in such a way that the axes of the accommodations are positioned parallel to one another one after the other. That is to say, the width dimension of the common store essentially corresponds to the width of the elongated objects to be individually separated, whilst the length dimension of the common store corresponds to at least the distance between the first and last dispenser assembly. In this way it is possible to load a very large number of elongated objects into a store, which objects then can be manipulated by one of the dispenser assemblies as needed. That is to say it is not necessary to perform separate filling operations for each of the dispenser assemblies.

The invention also relates to an assembly for placing stakes in a pot plant. This consists of the dispenser assembly described above, with which the stakes are present individually separated on the conveyor. There are gripper jaws which pick up the stakes and transport them to the desired position above the plant concerned. There is a placement device so as then to perform the movement for inserting the stake in the substrate.

According to an advantageous embodiment of the invention, the gripper means for the stakes consist of a structure that is able to perform a longitudinal movement and a rotating movement. The stakes are grasped by the gripper means while they are on the conveyor. A rotating movement is then performed so that they move into the plane above the plants. A translational movement then takes place into a position precisely in the substrate. This latter translational movement is particularly important if, as according to the advantageous embodiment of the invention, there are two dispenser assemblies for stakes. That is to say two stakes are always individually separated from two stores with the aid of two conveyors and are grasped by two gripper devices and pushed into a single plant.

The assembly described above can be combined with one or more dispenser assemblies. If more than one dispenser assembly is used, the common store described above can be used for a number of dispenser assemblies. By this means it is possible to place a large number of stakes simultaneously or immediately after one another. This can be important if these stakes have to be placed a relatively small distance apart, such as, for example, in substrate cultivation.

The invention also relates to a method for individual separation of elongated objects, comprising feeding said objects into a store, dispensing through a dispensing opening thereof to a conveyor for said elongated objects, which conveyor is provided with a accommodations and spaced support parts for said elongated objects, characterised in that said conveyor transports said elongated objects stepwise in a main direction and after each step performs a movement in the direction opposed to the main direction over a distance that is smaller than said step. By this means the dispenser assembly can be prevented from jamming. After all, as a result of the reverse movement elongated objects can be ejected from the accommodations again if these have not been correctly positioned therein.

The invention will be explained in more detail below with reference to an illustrative embodiment shown in the drawing. In the drawing:
Fig. 1a shows a perspective view of the dispenser assembly according to the invention;
Fig 1b is a cross-section according to the line Ib-Ib in Fig. 1a;
Fig. 2 shows a plan view of the assembly for placing stakes in pot plants;
Fig. 3 shows a side view of the construction for picking up the stakes and placing these in the pot plants;
Figs 4 - 6 show the various positions of the stakes during introduction into a pot plant;
Fig. 7 shows, diagrammatically, a side view of an apparatus comprising a number of dispenser assemblies according to the invention; and
Fig. 8 a - d shows a front view of the placing of stakes originating from the apparatus according to Fig. 7 in a substrate.

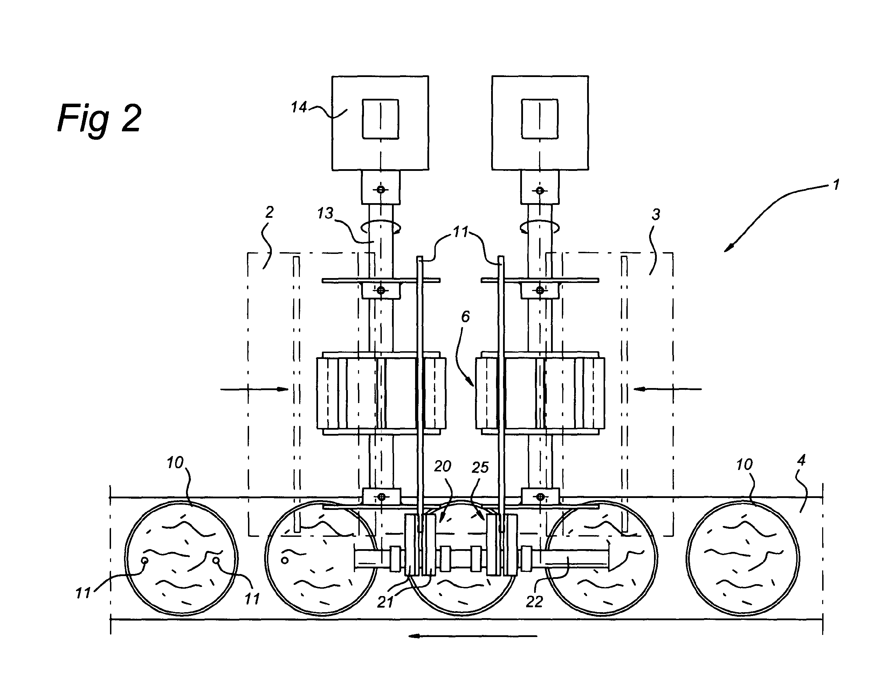

In the figures, and in particular Fig. 2, an assembly for transferring a stake from a store and placing this in a pot plant is indicated by 1.

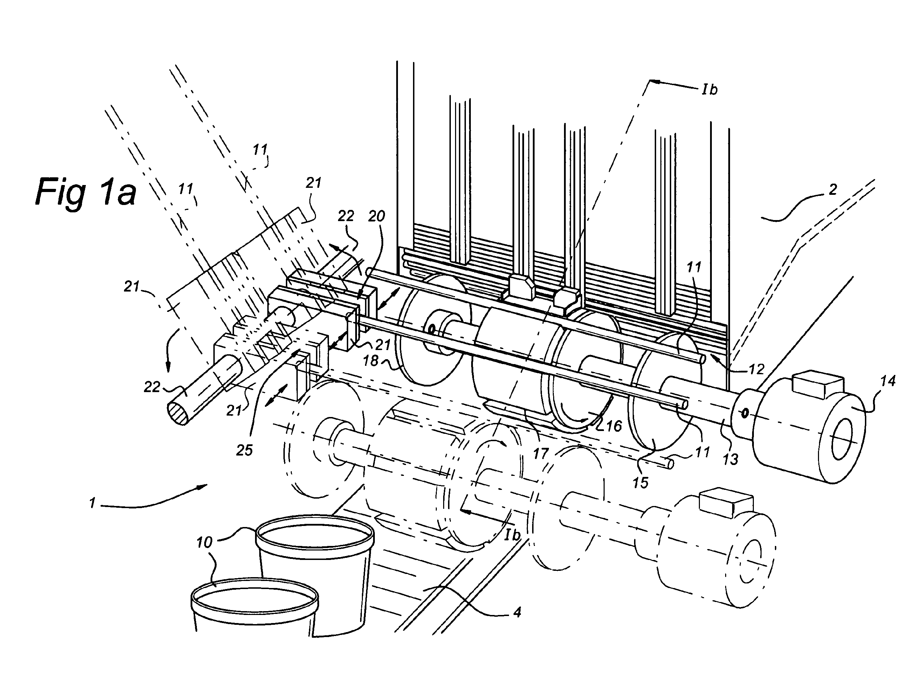

The stakes or other elongated objects 11 are placed in magazines 2 and 3. Fig. 1a shows in detail how the dispenser assembly is constructed. Store 2 is provided with an elongated opening 12, made in such a way that only one stake 11 at a time can drop out of it. On the other hand, this opening is sized so large that bent stakes or stakes with other defects are also able to move downwards through this opening 12, so that this opening 12 does not constitute a hindrance.

Immediately adjoining this opening 12 there is a construction consisting of a central cylindrical roller 16 provided with accommodations 17 bounded on either side by discs 15 and 18, respectively. These discs or support parts are smooth on the outside, that is to say are made without recesses. This construction is mounted on a common shaft 13 that is driven by a (servo)motor 14. The distance between the discs 15 and 18 with respect to the roller 16 is important. This distance is at least half the diameter of the discs 15 and 18.

The external diameter of the discs 15 and 18 is equal to the underside of the bases of the recesses 17 that delimits the internal diameter.

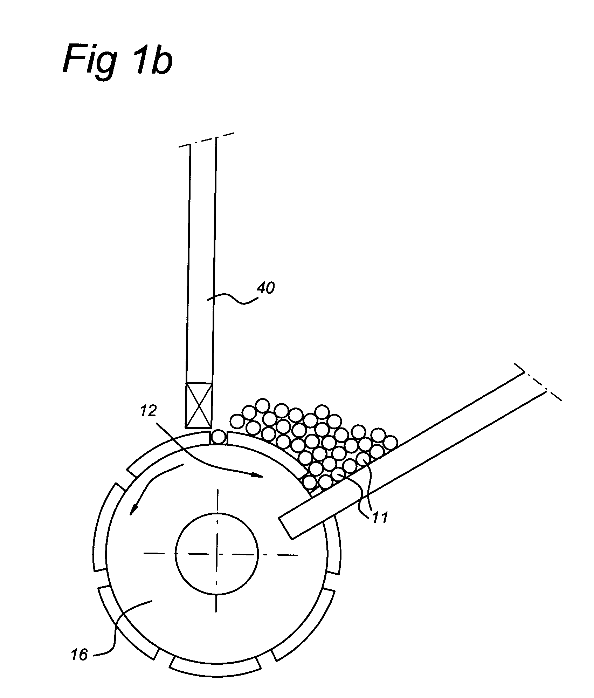

It can be seen from Fig. 1b that a number of stakes 11 dispensed through the dispensing opening 12 are resting on roller 16. These stakes are prevented from moving over roller 16 by means of a retainer 40.

The dispenser assembly described above functions as follows:
a stake originating from slit-shaped opening 12 is taken up, with a tight fit, by recess 17 and moves (in the drawing) to the left, that is to say forwards. With this arrangement it is not possible for the stake to come to rest in an oblique position on the cylindrical roller 16. After all, in such a case it is necessary, for example, for the left-hand end of the stake to be low and the right-hand end to be high. This is prevented by the disc 15. If, however, the stakes are so poorly positioned or so deformed that positioning not only on both discs 15 and 18 but also in the recess 17 is impossible, the stake is then not picked up by the relevant recess 17 of roller 16. Another stake 11 will be picked up. As a result of the movement of the other stakes 11 with respect to the stake 11 that is not picked up, this stake that is not picked up will be moved (rotated) and finally will reach a position in which it can be picked up in recess 17.

In this way it is possible to prevent the apparatus for dispensing stakes jamming and, on the other hand, it can be guaranteed that the stakes are accurately positioned.

There can be detection means which detect whether or not stake 11 is present in the recess 17. Furthermore, there can be position detection means which, with the aid of a computer, determine whether the cylindrical roller is in a position to be expected. If, for example, jamming of stake 11 and roller 16 occurs for whatever reason, roller 16 will not perform the desired movement. In such a case it is possible to react particularly quickly and motor 14 can be put into reverse. It is also possible to perform such a reverse movement as standard. That is to say cylindrical roller 16 performs a stepwise movement, the recesses being advanced one position further in each step. However, between carrying out such steps roller 16 is always reversed part of a step, that is to say part of the distance between two recesses. Optimum positioning of the stakes can be ensured in this way.

As can be seen from Fig. 2, there are two such constructions for individual separation of the stakes.

Furthermore, it can be seen from Fig. 2 (and also from Fig. 1) that there are two grippers 20, 25. These are both provided with jaws 21 for grasping the ends of the individually separated stakes on the cylindrical roller 16 and the adjacent discs 15, 18. The grippers 20, 25 can move back and forth along a guide 22 and can also rotate around the guide 22. 4 indicates a conveyor belt on which the pot plants 10 are placed.

The longitudinal guide 22 forms part of a yoke 26 that can be moved up and down with the aid of an eccentric drive 27.

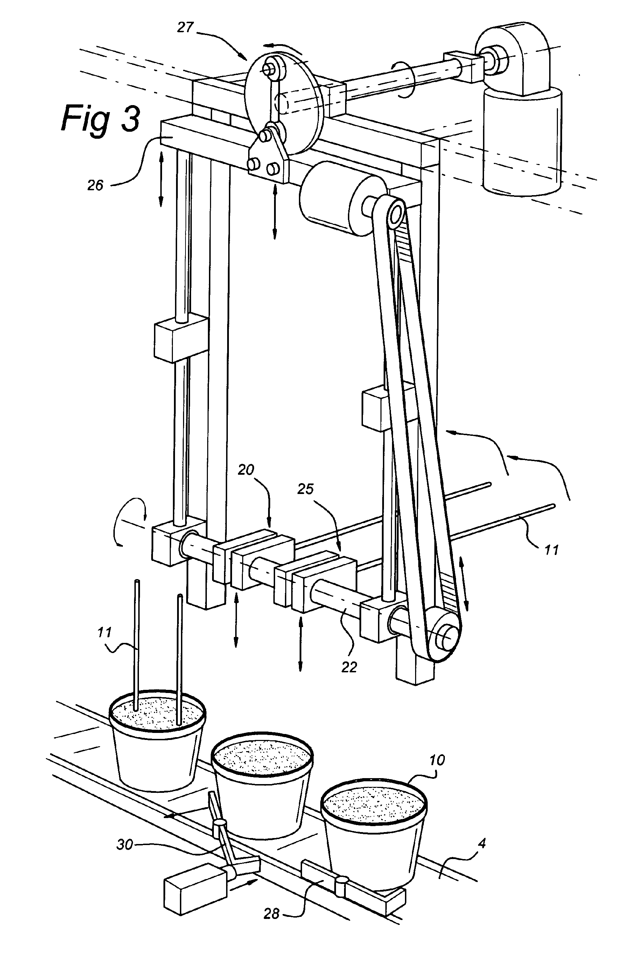

It can be seen from Fig. 3 that there are retainers 28. As long as the front pot 10 is stopped by stop 30 the subsequent pots will be held a fixed distance apart. If stop 30 is temporarily removed, a pot plant 10 can then move along and the next pot plant can be subjected to treatment.

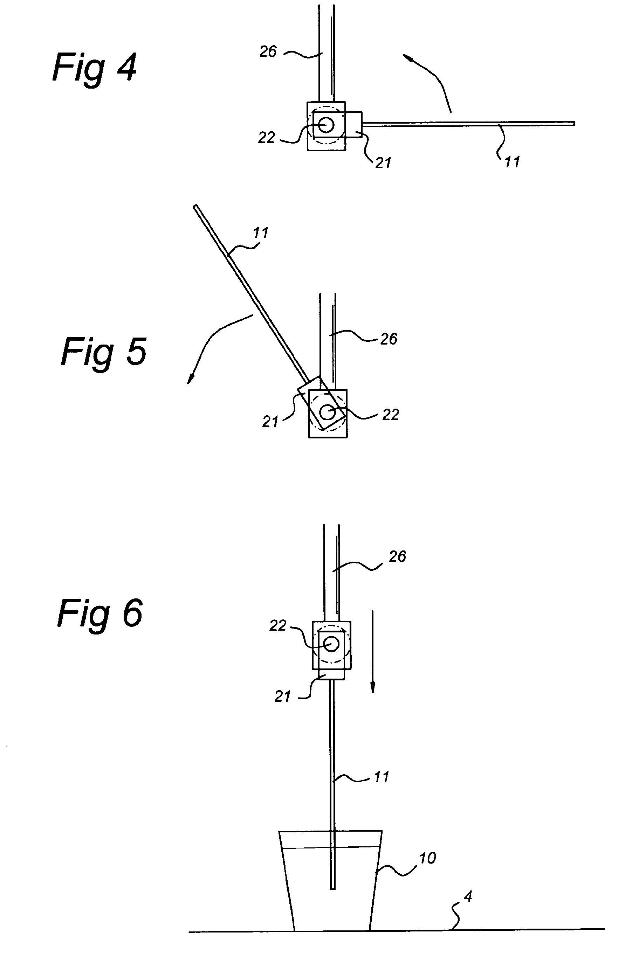

The assembly described above functions as follows:
after the stakes 11 have been individually separated on the dispenser assembly in a desired position and more particularly are in an accurately defined position on the cylindrical roller 16, gripper 20 (or gripper 25 for store 3) is moved towards the stake concerned. During this movement the clamping jaws 21 are in the position oriented vertically downwards so as not to strike the stakes concerned. Once they have arrived in a correct position, the clamping jaws 21 are moved into the horizontal position and the stake concerned is between them. The clamping jaws are moved towards one another, grasping the stake concerned between them. The gripper 20, 25 then executes a rotating movement around guide 22 to remove the stakes. This position is shown in broken lines in Fig. 4. It can be seen from the figure that the stakes extend vertically upwards clamped between the jaws 21. The stakes are then turned further into the position in Fig. 5. The grippers 20 and 25 become effective at the same time and/or earlier or later, so that the two stakes, one originating from store 2 and the other originating from store 3, are in the desired position with respect to one another above the pot plant concerned. The eccentric drive 27 is then operated, as a result of which yoke 26 with shaft 22 moves downwards and the stakes are pushed into the pot plant. After opening of the jaw 21, yoke 26 then moves back and the grippers 20, 25 can be brought into the starting position again. Stop 30 is released and the next pot plant can be provided with stakes. In the interim the stakes 11 from the store 2, 3 can be individually separated.

It has been found that a large number of stakes per hour can be processed in this way. Up to 3,000 pots per hour per dispenser assembly can be achieved without special measures.

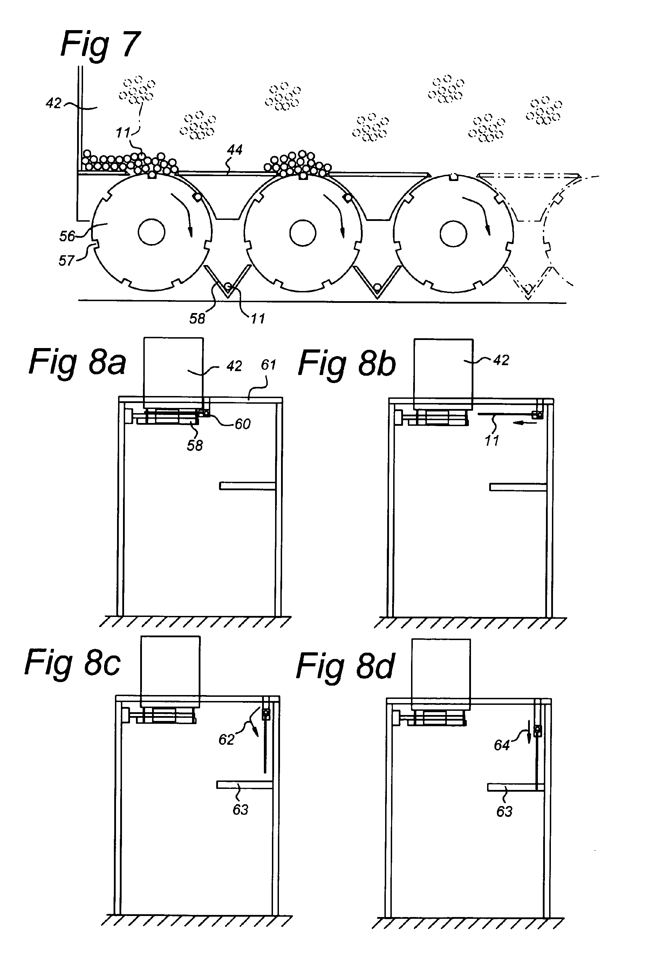

A further variant of the invention is shown in Figs 7 and 8. This consists of a number of dispenser assemblies which are basicly are constructed as described with reference to Fig. 1. These are provided with a common store 42 for stakes 11. There are a number of rollers 56, each provided with recesses 57. Instead of the retainer 40, there is now a retainer 44. The rollers 16 rotate in the store 42. Just as shown in the example described above with reference to Fig. 1, there is a support disc, which is not shown, corresponding to the support discs 15 and 18 on either side of each roller 56. Such a construction can be combined with an assembly for positioning the stakes. For this purpose the stakes are first placed in troughs 58, as is shown in Figs 7 and 8. Because, apart from the last roller 56, there is no space for carrying out the movement explained with reference to Figs 4 - 6, in this case the construction for placing the stakes will be differently designed. As can be seen highly diagrammatically from Figs 8a-d, there are clamping jaws 60 which are able to move back and forth along guide 61 when grasping the stakes 11. It can be seen from Fig. 8b that in this way stakes 11 are moved beyond the range of the store 42. As can be seen from Fig. 8c, rotation then takes place in the direction of arrow 62. The substrate in which the stakes have to be placed is indicated diagrammatically by 63. It can be seen from Fig. 8d that such placing takes place by movement in the direction of arrow 64. By placing a number of rollers 56 one after the other, as shown in Fig. 7, a row of stakes will always be placed simultaneously or immediately after one another in this way.

No details have been given above with regard to control of the various components of the apparatus. It will be understood that this is present and that the mutual movement of the various parts is synchronised. Furthermore, there are means to detect the presence of both the pot plant and the stake. There can also be detectors to investigate whether the position of the various stakes is correct. The apparatus can be installed in a fixed position or as a mobile apparatus. These and further modifications as well as modifications in the system for individually separating the stakes will be immediately apparent to those skilled in the art after reading the above and fall within the scope of the appended claims.

## Claims

1. Dispenser (2, 3, 6) assembly for elongated objects (11) such as plant stakes, comprising a store (2, 3, 42) provided with an elongated dispensing opening (12) for said objects, as well as a conveyor, moving past said dispensing opening, for said objects, said conveyor comprising a central part (16), said central part being bordered on either side by, in each case, a support part (15) located ,each support part being space from the central part and arranged so as, to support one end of the said elongated object, **characterised in that** said central part is provided with accommodations that are designed to accommodate said objects and extend essentially parallel to said dispensing opening.

2. Dispenser assembly according to Claim 1, wherein said elongated dispensing opening is made directly adjoining the central part and designed to contain various elongated objects alongside one another.

3. Dispenser assembly according to Claim 1 or 2, wherein said central part provided with accommodations comprises a cylinder.

4. Dispenser assembly according to one of the preceding claims, wherein said support parts comprise a disc.

5. Dispenser assembly according to one of the preceding claims, wherein said support part is not provided with accommodations.

6. Dispenser assembly according to one of the preceding claims, wherein the surface of said support part and said part provided with accommodations execute the same transporting movement.

7. Dispenser assembly according to Claims 1 - 5, wherein said cylinder and discs are mounted on a common shaft (13).

8. Apparatus comprising a series of dispenser assemblies according to one of the preceding claims with a common store, wherein the axes of the accommodations of each of said assemblies are arranged parallel and in line one after the other.

9. Assembly for placing an elongated object such as a stake in an object such as a pot plant (10), comprising a placing apparatus (26, 27) for said object, gripper means (20, 25) for said objects and a dispenser assembly according to one of the preceding claims.

10. Assembly according to Claim 9, wherein said gripper means for said object comprise a clamping jaw construction that can be moved in rotating and translational movement.

11. Assembly according to Claim 9 or 10, comprising two adjacent gripper means for said objects interacting with two dispenser assemblies according to one of Claims 1-6 located opposite one another.

12. Method for individual separation of elongated objects, comprising feeding said objects into a store, dispensing through a dispensing opening thereof to a conveyor for said elongated objects, said conveyor being provided with a accommodations and support parts, spaced therefrom for said elongated objects, **characterised in that** said conveyor transports said elongated objects stepwise in a main direction and after each step performs a movement in the direction opposed to the main direction over a distance that is smaller than said step.
